(19) Europäisches Patentamt
European Patent Office
Office européen des brevets

(11) Veröffentlichungsnummer: **0 412 409 A2**

# (12) EUROPÄISCHE PATENTANMELDUNG

(21) Anmeldenummer: **90114644.9**

(22) Anmeldetag: **31.07.90**

(51) Int. Cl.5: **C09K 19/34**, C09K 19/42, C09K 19/46

(30) Priorität: **05.08.89 DE 3925971**

(43) Veröffentlichungstag der Anmeldung:
**13.02.91 Patentblatt 91/07**

(84) Benannte Vertragsstaaten:
**DE ES FR GB IT NL**

(71) Anmelder: **HOECHST AKTIENGESELLSCHAFT**
**Postfach 80 03 20**
**D-6230 Frankfurt am Main 80(DE)**

(72) Erfinder: **Dübal, Hans-Rolf, Dr.**
**Heuhohlweg 6**
**D-6240 Königstein/Taunus(DE)**
Erfinder: **Escher, Claus, Dr.**
**Amselweg 3**
**D-6109 Mühltal(DE)**
Erfinder: **Harada, Takamasa**
**Kolberger Strasse 26**
**D-6370 Oberursel(DE)**
Erfinder: **Hemmerling, Wolfgang, Dr.**
**Billtalstrasse 32**
**D-6231 Sulzbach(DE)**
Erfinder: **Illian, Gerhard, Dr.**
**Rauenthaler Weg 32**
**D-6000 Frankfurt am Main(DE)**
Erfinder: **Müller, Ingrid, Dr.**
**Am Pfingstbrunnen 1**
**D-6238 Hofheim am Taunus(DE)**
Erfinder: **Murakami, Mikio**
**New Town Blg. 202, 8-1, Minami 2-chome**
**Kakegawa-shi, Shizuoka-ken(JP)**
Erfinder: **Ohlendorf, Dieter, Dr.**
**Am Kühlen Grund 4**
**D-6237 Liederbach(DE)**
Erfinder: **Wegener, Peter, Dr.**
**Am Eichkopf 4**
**D-6240 Königstein/Taunus(DE)**
Erfinder: **Wingen, Rainer, Dr.**
**Brunnenstrasse 1**
**D-6234 Hattersheim(DE)**

## (54) Flüssigkristalline, insbesondere ferroelektrische flüssigkristalline Mischungen und ihre Verwendung in elektrooptischen Vorrichtungen.

(57) Die neuen flüssigkristallinen Mischungen, bei ferroelektrischem Verhalten enthalten sie zusätzlich eine optisch aktive Verbindung als Dotierstoff, bauen auf mindestens 2 Mischungskomponenten der allgemeinen Formel (I) und mindestens einem Carbonsäureester der allgemeinen Formel (XI) oder (XII) auf,

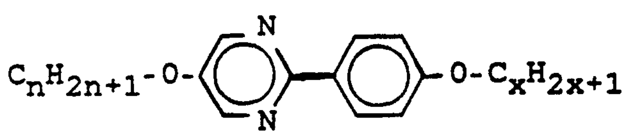

(I),

wobei x eine ganze Zahl von 2 bis 14 und n eine ganze Zahl von 6 bis 14 ist

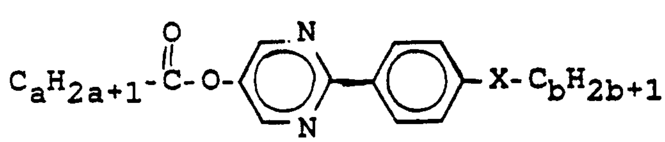

(XI)

EP 0 412 409 A2

wobei
a, b unabhängig voneinander
eine ganze Zahl von 2 bis 14
-X- eine $-O-\overset{O}{\overset{\parallel}{C}}-$ oder eine -O-Gruppe bedeuten kann.

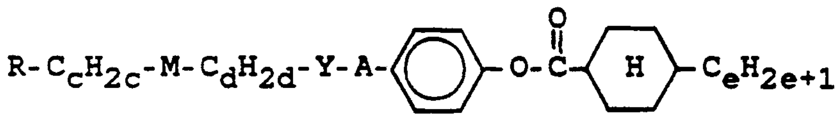

(XII)

wobei
A z.B. Pyrimidin-2,5-diyl,
-Y- z.B. -O-, -S-,
-M- z.B. -O-, $-CH_2-$,
-R z.B. $-CH_3$ bedeuten und
c, d, e z.B. ganze Zahlen wie 2, 3 oder 4 bedeuten.

Die Mischungen, die auch weitere Komponenten enthalten können, besitzen günstige Eigenschaften für die Verwendung in elektrooptischen Anzeigeelementen wie niedrige Schmelzpunkte und niedrige Kristallisationstemperaturen.

# FLÜSSIGKRISTALLINE, INSBESONDERE FERROELEKTRISCHE FLÜSSIGKRISTALLINE MISCHUNGEN UND IHRE VERWENDUNG IN ELEKTROOPTISCHEN VORRICHTUNGEN

Flüssigkristalline haben in jüngerer Zeit aufgrund der ungewöhnlichen Kombination von anisotropem und fluidem Verhalten eine Vielzahl von Anwendungsmöglichkeiten in elektro-optischen Schalt- und Anzeigevorrichtungen gefunden. Dabei können ihre elektrischen, magnetischen, elastischen und/oder thermischen Eigenschaften zu Orientierungsänderungen benutzt werden. Optische Effekte lassen sich dann beispielsweise mit Hilfe der Doppelbrechung, der Einlagerung dichroitisch absorbierender Farbstoffmoleküle "(guest-host mode") oder der Lichtstreuung erzielen.

Zur Erfüllung der ständig steigenden Praxisanforderungen auf den verschiedenen Anwendungsgebieten besteht wachsender Bedarf an neuen verbesserten Flüssigkristall("liquid crystal")-Mischungen und somit auch an einer Vielzahl neuer mesogener Verbindungen.
Dieses gilt sowohl für die Gebiete, bei denen nematische LC-Phasen (z.B. TN = "twisted nematic", STN = "supertwisted nematic", SBE = "supertwisted birefringence effect", ECB = "electrically controlled birefingence") verwendet werden, als auch für solche mit smektischen LC-Phasen (z.B. ferroelektrische, elektrokline).

Aufgrund ihrer kurzen Schaltzeiten haben ferroelektrische Flüssigkristalle besonderes Interesse als Anzeigemedium in elektro-optischen Bauelementen erweckt (z.B. Lagerwall et al. "Ferroelectric Liquid Crystals for Displays", SID Symposium, October Meeting 1985, San Diego, Ca. USA).

Für die praktische Verwendung von ferroelektrischen Flüssigkristallen in elektro-optischen Anzeigen werden chirale, geneigt-smektische Phasen wie $S_c$-Phasen benötigt [R.B. Meyer, L. Liébert, L. Strzelecki und P. Keller, J. Physique 36 , L-69 (1975)], die über einen großen Temperaturbereich stabil sind. Dieses Ziel kann man mit Verbindungen erreichen, die selbst solche Phasen, z.B. $S_c$-Phasen, ausbilden oder aber, indem man nicht chirale, geneigt-smektische Phasen ausbildende Verbindungen mit optisch aktiven Verbindungen dotiert [M. Brunet, Cl. Williams, Ann. Phys. 3 , 237 (1978)].

Bei der Verwendung ferroelektrischer Flüssigkristallmischungen in elektro-optischen Bauelementen ist eine einheitliche planare Orientierung der Flüssigkristalle notwendig, um ein hohes Kontrastverhältnis zu erzielen. Es hat sich gezeigt, daß sich eine einheitliche planare Orientierung in der $S_c$-Phase erreichen läßt, wenn die Phasenfolge der Flüssigkristallmischung mit abnehmender Temperatur lautet: Isotrop→nematisch→smektisch A→smektisch C (s. z.B. K. Flatischler et al., Mol. Cryst. Liq. Cryst. 131 , 21 (1985); T. Matsumoto et al., p. 468-470, Proc. of the 6th Int. Display Research Conf., Japan Display, 30. September-2. October 1986, Tokyo, Japan; M. Murakami et al., ibid. p. 344-347).

Für ferroelektrische (chiral smektische) Flüssigkristallmischungen muß zusätzlich die Bedingung erfüllt sein, daß die Ganghöhe (pitch) der Helix in der $S^*$-Phase groß, d.h. größer als 5 µm, und in der $N^*$-Phase sehr groß, d.h. größer als 10 µm bzw. unendlich ist.

Die optische Schaltzeit $\tau$[µs] ferroelektrischer Flüssigkristallsysteme, die möglichst kurz sein soll, hängt von der Rotationsviskosität des Systems $\gamma$[mPas], der spontanen Polarisation $P_s$[nC/cm²] und der elektrischen Feldstärke E [V/m] ab nach der Beziehung

$$\tau \approx \frac{\gamma}{P_S \cdot E}$$

Da die Feldstärke E durch den Elektrodenabstand im elektrooptischen Bauteil und durch die angelegte Spannung festgelegt ist, muß das ferroelektrische Anzeigemedium niedrigviskos sein und eine hohe spontane Polarisation aufweisen, damit eine kurze Schaltzeit erreicht werden kann.

Schließlich wird neben thermischer, chemischer und photochemischer Stabilität eine kleine optische Anisotropie $\Delta n$, vorzugsweise bei einer LC-Schichtdicke im Display von 2 µm gleich 0,13, bei einer Schichtdicke von 1,5 µm gleich 0,17, und eine gering positive oder vorzugsweise negative dielektrische Anisotropie $\Delta\epsilon$ verlangt. (S.T. Lagerwall et al., "Ferroelectric Liquid Crystals for Displays" SID Symposium, Oct. Meeting 1985, San Diego, Ca, USA).

Die Gesamtheit dieser Forderungen ist nur mit Mischungen aus mehreren Komponenten zu erfüllen. Als Basis (oder Matrix) dienen dabei bevorzugt Verbindungen, die möglichst selbst bereits die gewünschte Phasenfolge I→N→$S_A$→$S_c$ aufweisen. Weitere Komponenten der Mischung werden oftmals zur Schmelzpunktserniedrigung und zur Verbreiterung der $S_c$-und meist auch der N-Phase, zum Induzieren der

optischen Aktivität, zur pitch-Kompensation und zur Anpassung der optischen und dielektrischen Anisotropie zugesetzt, wobei aber beispielsweise die Rotationsviskosität möglichst nicht vergrößert werden soll.

Es ist bekannt, daß bestimmte Derivate des Phenylpyrimidins, insbesondere 5-Alkyl-2(4-alkyloxy-phenyl)-pyrimidine, $S_c$-, $S_A$- und N-phasen ausbilden können (D. Demus und H. Zaschke, "Flüssige Kristalle in Tabellen", VEB Deutscher Verlag für Grundstoffindustrie, Leipzig 1974, S. 260-261) und daneben durch Zusatz optisch aktiver Dotierstoffe in ferroelektrische Flüssigkristall-Mischungen umgewandelt werden können [L.M. Blinov et al., Sow. Phys. Usp. 27 (7), 492 (1984); L.A. Beresnew et al., Ferroelectrics 59 [321]/I (1984), vorgetragen auf der 5th. Conference of Soc. Countries on Liquid Crystals, Odessa, UdSSR, Oct. 1983; DE-A 35 15 347, EP-A 0 206 228, EP-A 0 225 195].

Es ist weiter bekannt, daß tiefere Schmelzpunkte und eine Verbreiterung der gewünschen flüssigkristallinen Phasen durch Mischen mehrerer flüssigkristalliner Verbindungen erreicht werden [D. Demus et al., Mol. Cryst. Liq. Cryst. 25 , 215 (1974), J.W. Goodby, Ferroelectrics 49 , 275 (1983)], und daß die Schmelzpunktsdepression umso ausgeprägter ist, je stärker sich auch die Mischungskomponenten strukturell unterscheiden. (J.S. Dave et al., J. Chem. Soc. 1955 , 4305). Es war also davon auszugehen, daß besonders tiefe Mischungsschmelzpunkte und damit tiefe Phasenumwandlungspunkte der $S_c$-Phase erhalten werden, wenn Verbindungen gemischt werden, die sich einerseits strukturell wesentlich unterscheiden, andererseits aber ähnlich genug sind, um gut mischbar zu sein.

Aus JP 62-189163 sind trans-Alkyl-cyclohexancarbonsäure[4-(5-alkyl-pyridin-2-yl]-phenylester bekannt. In dieser Patentanmeldung wird die Anwendung in nematischen flüssigkristallinen Mischungen bschrieben. Es wird an dieser Stelle nicht beschrieben daß diese Komponenten auch $S_c$-Phasen aufweisen, welche ihre Verwendung in ferroelektrischen Mischungen ermöglicht.

Aus der DE-C 22 57 588 ist ein 5-Butyloxy-2(-4-pentyloxyphenyl)-pyrimidin bekannt, das aber nur eine nematische Phase bildet.

Es wurde in DE 38 31 226.3 gefunden, daß sich als Basiskomponente Verbindungen vom Typ 5-Alkyloxy-2(4-alkyloxy-phenyl)-pyrimidine der allgemeinen Formel (I)

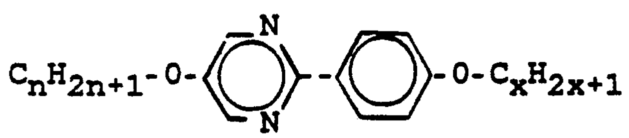

(I),

in der $C_nH_{2n+1}$ und $C_xH_{2x+1}$ geradkettige Alkylreste sind, in denen n eine ganze Zahl von 6 bis 14 und x eine ganze Zahl von 2 bis 14 bedeuten, als Komponenten der Matrix (Basis) für flüssigkristalline, insbesondere ferroelektrische flüssigkristalline Mischungen gut eignen; von ihnen sind mindestens 2 unterschiedliche Verbindungen $a'$ und $a''$ im Gemisch vorhanden. Sie zeigen größtenteils mit abnehmender Temperatur die erwünschte Phasenfolge $I \rightarrow N \rightarrow S_A \rightarrow S_c$. Im Vergleich zu den bekannten 5-Alkyl-2-(4-alkoxy-phenyl)pyrimidinen weisen sie breitere $S_c$-Phasen und höhere Umwandlungstemperaturen des $S_c \rightarrow S_A$-Übergangs auf. Die $S_c$-Phase wird außerdem bereits bei einer niedrigeren Anzahl von C-Atomen in den Alkyl(oxy)ketten gebildet, z.B. bereits dann, wenn $n = 8$ und $x \ngtr 2$ oder $n = 6$ und $x \ngtr 6$ sind. Es ergibt sich daraus für die Mischungsherstellung im Vergleich zu den bekannten 5-Alkyl-2-(4-alkoxy-phenyl)pyrimidinen eine größere Auswahl an homologen, gut mischbaren Verbindungen mit $S_c$-phasen. Diese ermöglichen es außerdem aufgrund ihrer höheren Phasenumwandlungstemperaturen $S_A$ nach $S_c$ (z.B. 70 bis 90 °C) und ihrer breiteren $S_c$-Phasen, Mischungen mit sehr breiten Sc-Phasen (z.B. bis zu ca. 68 °C) und hohen Umwandlungstemperaturen $S_A/S_c$ herzustellen.

Die Mischungen gemäß DE 38 31 226 aus Verbindungen der Formel (I) eignen sich bereits sehr gut als Matrix für ferroelektrische flüssigkristalline Mischungen. Sie weisen allerdings noch eine große optische ($\Delta n$) und eine große positive dielektrische ($\Delta \epsilon$) Anisotropie auf. Außerdem ist die nematische Phase, je nach der Kettenlänge n bzw. x der Substituenten, noch schmal.

Durch Zusatz einer Verbindung (Cyclohexancarbonsäureester) der allgemeinen Formel (II),

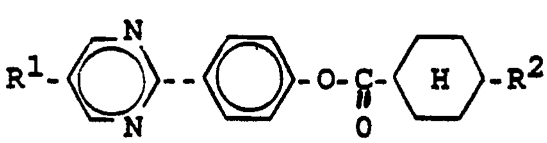

(II)

können gleichzeitig die Größen [Δn] und [Δε] verbessert und die Breite der nematischen Phase den praktischen Anforderungen angepaßt werden.

Es bedeuten in der allgemeinen Formel (II):

$R^1$ eine Alkylkette mit 10 bis 16 oder eine Alkoxykette mit 8 bis 14 C Atomen und $R^2$ eine Alkylkette mit 2 bis 9 C-Atomen. Diese Verbindungen werden in der DE-A 37 31 639 beschrieben. Sie entfalten ihre günstige Wirkung bereits bei Zusatzmengen ab etwa 2 mol%. Bei Zusatzmengen ab etwa 10 und bis etwa 40 mol% ergibt sich eine Verbreiterung der nematischen Phase um etwa 8 bis 18 °C und der smektischen Phase um etwa 6 bis 15 °C. Vorteilhaft ist es daneben, daß der Zusatz die an sich bereits niedrige Rotationsviskosität der erfindungsgemäßen Basis-Mischung nur unwesentlich erhöht.

Eine Absenkung des Schmelzpunkts und der unteren Phasenumwandlungstemperatur der $S_c$-Phase der Mischungen kann, wenn diese zu hoch liegen, durch Zusatz mindestens einer Verbindung der Formel (IV) erfolgen

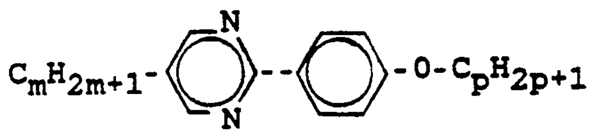 (IV)

wobei m und p unabhängig voneinander ganze Zahlen von 6 bis 14 sind. Bei Zusatzmengen von etwa 10 bis 25 mol% der Verbindung bezogen auf die Gesamtmischung, ergeben sich Absenkungen der unteren Temperaturgrenze der $S_c$-Phase um bis zu 10 °C.

In der deutschen Patentanmeldung P 39 09 356 werden zur Kontrastverbesserung im Display als weitere Komponente C für eine flüssigkristalline Grundmischung Carbonsäureester der allgemeinen Formel (V), (VI), (VII), (VIII) und/oder (IX) vorgeschlagen:

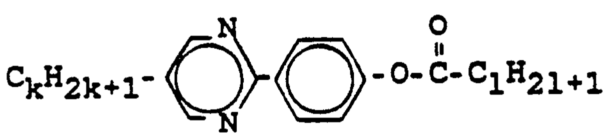 (V),

wobei
k eine ganze Zahl von 6 bis 14 und
1 eine ganze Zahl von 2 bis 14 bedeuten kann,

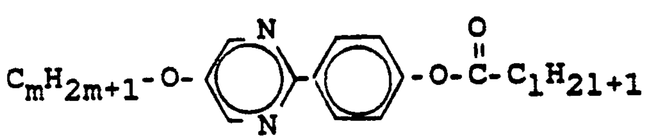 (VI),

wobei
m eine ganze Zahl von 5 bis 14 und
1 eine ganze Zahl von 2 bis 14 bedeuten kann,

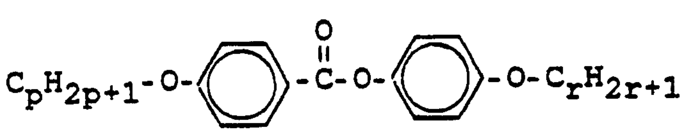 (VII),

wobei
p eine ganze Zahl von 7 bis 14 und
r eine ganze Zahl von 4 bis 14 bedeuten kann,

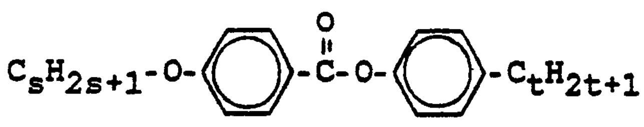

(VIII),

wobei
s eine ganze Zahl von 6 bis 14 und
t eine ganze Zahl von 6 bis 14 bedeuten kann,

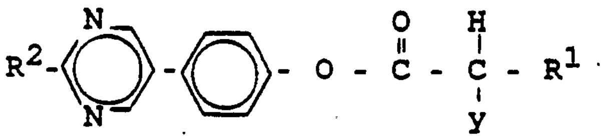

(IX)

wobei
$R^2$ = geradkettiges oder verzweigtes ($C_1$-$C_{12}$)-Alkyl oder Alkenyl, wobei eine oder zwei nichtbenachbarte $CH_2$-Gruppen durch O- und/oder S-Atome ersetzt sein können,
Y = F, Cl, Br, CN oder $CF_3$ und
$R^1$ = verzweigtes ($C_3$-$C_9$)-Alkyl, Benzyl oder Phenyl.

Trotz der durch die bisherigen Mischungen erzielten Erfolge bei der Bereitstellung neuer flüssigkristalliner Materialien kann die Entwicklung von Flüssigkristall-Grundmischungen, insbesondere aber auch von ferroelektrischen Flüssigkristall mischungen, noch in keiner Weise als abgeschlossen betrachtet werden. Die Hersteller von Anzeigeelementen ("displays") sind an einem breiten Spektrum verschiedener Mischungen interessiert. Diese u.a. auch deshalb, weil erst das Zusammenwirken der flüssigkristallinen Mischungen mit den einzelnen Bauteilen der Anzeigeelemente bzw. der Zellen (z.B. der Orientierungsschicht) Rückschlüsse auf die Qualität der flüssigkristallinen Mischungen zuläßt.

Aufgabe der vorliegenden Erfindung ist es deshalb, Kompositionen aus geeigneten Komponenten für flüssigkristalline Grundmischungen, aber auch für ferroelektrische flüssigkristalline Mischungen bereitzustellen, die möglichst viele der vorstehend dargestellten Kriterien erfüllen, die insbesondere einen niedrigen Schmelzpunkt besitzen, die in einem Display zu verbessertem Kontrast führen, die eine speziell auf die Anwendung eingestellte flüssigkristalline Phasenbreite mit der gewünschten Phasenfolge aufweisen und die beim Abkühlen im Display erst bei möglichst tiefen Temperaturen oder besonders bevorzugt nicht mehr kristallisieren (Kristallisationstemperatur < Schmelztemperatur).

Ein Gegenstand der Erfindung sind die nachstehend charakterisierten flüssigkristallinen Grundmischungen, die als Komponente A Verbindungen aus DE 38 31 226 enthalten, als Komponente B gegebenenfalls einen oder mehrere Carbonsäureester aus DE 30 09 356 und die als Komponente D mindestens einen Carbonsäureester der allgemeinen Formel (XI) und/oder (XII) enthalten.

Auch Gegenstand der Erfindung sind solche flüssigkristallinen Mischungen die zusätzlich als Komponente C einen optisch aktiven Dotierstoff enthalten.

Die erfindungsgemäßen Mischungen enthalten als Komponente A mindestens zwei 5-Alkoxy-2-(alkyloxy-phenyl)pyrimidine der allgemeinen Formel (I), wobei die am Pyridinring gebundene Alkyloxygruppe eine konstante Länge und der am Phenylring befindliche Alkyloxyrest um jeweils zwei Kohlenstoffatome variiert wird, sowie gegebenenfalls Verbindungen der Formeln (II) und/oder (IV), gegebenenfalls als Komponente B einen oder mehrere Carbonsäureester der allgemeinen Formeln (V), (VI), (VII), (VIII) und (IX), sowie gegebenenfalls als Komponente C einen oder mehrere optisch aktive Dotierstoffe aus der Gruppe

a) optisch aktive Ester aus a-Chlorcarbonsäuren und mesogenen Phenolen,
b) optisch aktive Ester des N-Acylprolins,
c) optisch aktive Ester von 1,3-Dioxolan-4-carbonsäuren,
d) optisch aktive Ester von Oxiran-2-carbonsäuren,
e) optisch aktive Ester der Tetrahydrofuran-2-carbonsäure mit mesogenen Phenolen,
f) optisch aktive Aryl-2,3-epoxyalkly-ether,
g) optisch aktive 1,3-Dioxolan-4-yl-ether, und darüber hinaus als Komponente D mindestens einen Carbonsäureester der allgemeinen Formel XI oder XII. Bevorzugt wird eine flüssigkristalline Mischung, die als Komponente A keine Verbindung der allgemeinen Formel II und als Komponente B keine Verbindungen der allgemeinen Formeln (VII) und (VIII) enthalten

Besonders bevorzugt wird eine LC-Mischung, die als Komponente D sowohl mindestens einen Carbonsäureester der Formel (XI), als auch mindestens einen Carbonsäureester der Formel (XII) enthält.

Ebenfalls besonders bevorzugt wird eine LC-Mischung, die als Komponente D mindestens ein 5-Alkanoyloxy-2-(4′-alkyloxyphenyl)pyrimidin der allgemeinen Formel (XIa) enthält,

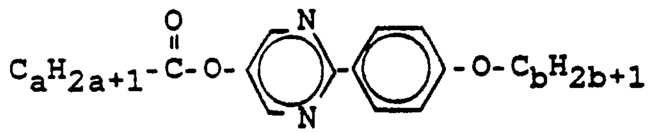 (XIa),

wobei a und b unabhängig voneinander eine ganze Zahl von 2 bis 14 bedeuten.

Auch bevorzugt wird eine flüssigkristalline Mischung, die als Komponente D mindestens einen 2-(4′-Alkanoyloxy-phenyl) pyrimidin-5-yl-alkansäureester der allgemeinen Formel (XIb) enthält,

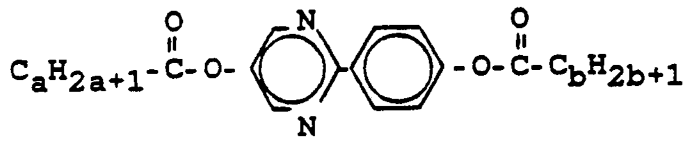 (XIb),

wobei a und b unabhängig voneinander eine ganze Zahl von 2 bis 14 bedeuten.

Beide Verbindungsklassen XIa und XIb zeichnen sich dadurch aus, daß sie im Vergleich zu den Verbindungen der allgemeinen Struktur I, IV, V und VI neben der $S_c$-Phase über eine ausgeprägte nematische Phase verfügen und daher als zusätzliche Komponente zum Einstellen eines gewünschten nematischen Phasenbereichs geeignet sind ohne die Viskosität der Mischung zu erhöhen. Diese Komponenten sind daher geeignet die Verbindung des Typs II in den Mischungen aus DE 3 831 226 zu ersetzen.

Die erfindungsgemäßen Mischungen sind für die Verwendung in elektro-optischen Schalt- und Anzeigeelementen besonders geeignet, da sie besonders niedrige Schmelzpunkte und andere zuvor genannte Eigenschaften aufweisen.

Ein weiterer Gegenstand dieser Erfindung ist die Verwendung der trans-Cyclohexancarbonsäureester der allgemeinen Formel XII in flüssigkristallinen Mischungen

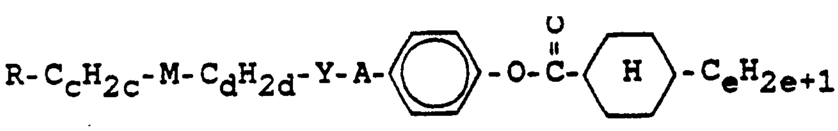 (XII)

wobei -A- = 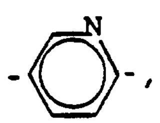, 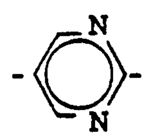

-Y- = $-CH_2-$, -O-, -S-,

-M- = 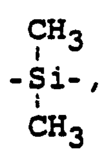, -O- $-CH_2-$

-R = -H, $-CH_3$, 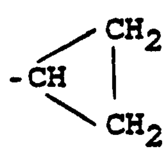

c = eine ganze Zahl zwischen 1 und 12

d = eine ganze Zahl von 0 bis 6

e = eine ganze Zahl von 2 bis 9
bedeuten, unter der Bedingung daß wenn
M gleich $CH_2$ ist, ist d gleich Null, wenn

A gleich 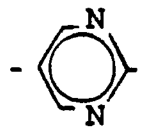 ist,

R nicht gleich H oder $CH_3$ ist oder
M nicht gleich $CH_2$ sein darf, und wenn M ungleich $CH_2$ ist, muß d größer als Null sein.

Die Verwendung von Cyclohexancarbonsäure des Typs XII als Mischungsbestandteil hat sich überraschenderweise als besonders vorteilhaft erwiesen.So führt schon die Zugabe von 5 bis 40 % einer der Verbindungen zu einer deutlichen Erniedrigung des Schmelzpunktes und zu einer Verbreiterung der nematischen Phase von 3 bis 30 °C und zu einer Erhöhung der $S_c$-Phase von 1 bis zu 15 °C. Diese Substanzen sind daher sehr geeignet, einerseits den $S_c$-Phasenbereich (und damit den Anwendungsbereich) und andererseits den Bereich der nematischen Phase zu verbreitern. Letzteres führt häufig dazu, daß die ferroelektrischen Proben überhaupt orientiert werden können.

Die Verwendung der Verbindungen der allgemeinen Formel XII führt in den erfindungsgemäßen Mischungen nicht nur zu niedrigen Schmelzpunkten, sondern überraschenderweise auch zu einer Erniedrigung der Kristallisationstemperaturen.

Bevorzugt ist dabei die Verwendung der Verbindungen der allgemeinen Formel XIIa und XIIb

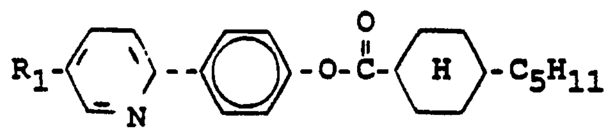 XIIa

wobei $R_1$ ein Alkylrest mit 6 bis 16 C-Atomen ist und die am Pyridin gebundene $-CH_2-$ Einheit auch durch -O- ersetzt sein kann.

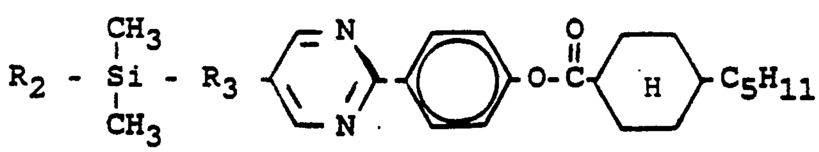 (XIIb)

wobei $R_2$ ein Alkylrest mit 1 bis 6 C-Atomen ist, $R_3$ ein Alkylenrest mit 2 bis 6 C-Atomen und wobei die am Pyrimidin gebundene $-CH_2-$Einheit auch durch -O- ersetzt sein kann.

Die Erfindung wird durch die nachfolgenden Beispiele verdeutlicht.

## Beispiel 1

a) Eine Mischung aus den 6 Komponenten

| | |
|---|---|
| 5-Octyloxy-2-(4-hexyloxy-phenyl)-pyrimidin | 22,4 Mol-% |
| 5-Octyloxy-2-(4-octyloxy-phenyl)-pyrimidin | 10,3 Mol-% |
| 5-Octyloxy-2-(4-butyloxy-phenyl)-pyrimidin | 23,7 Mol-% |
| 5-Octyloxy-2-(4-decyloxy-phenyl)-pyrimidin | 18,8 Mol-% |
| 2-(4-Octyloxy-phenyl)-pyrimidin-5-yl-nonansäureester Verbindung des Typs XI | 18,8 Mol-% |
| 2-(4-Dodecyloxy-phenyl)-pyrimidin-5-yl-heptansäureester Verbindung des Typs XI | 6 Mol-% |

zeigt folgende flüssigkristalline Phasenbereiche:
X 8 $S_c$ 84 $S_A$ 87 N 93 I

b) im Vergleich dazu weist die, in DE 3831226.3 beanspruchte flüssigkristalline Mischung, die sich von der obgengenannten Mischung nur dadurch unterscheidet, daß sie keine Verbindung des Typs XI enthält, folgende Phasenbereiche au:
X 13 $S_c$ 81 $S_A$ 95 N 98 I

Die Zugabe von Verbindungen des Typs XI führt offensichtlich zu einer Verbreiterung der nematischen Phase und zu einer Erniedrigung des Schmelzpunktes um 5° C.

**Beispiel 2**

a) Eine Mischung aus den 5 Komponenten

| | |
|---|---|
| 5-Octyloxy-2-(4-hexyloxy-phenyl)-pyrimidin | 23,8 Mol-% |
| 5-Octyloxy-2-(4-octyloxy-phenyl)-pyrimidin | 11 Mol-% |
| 5-Octyloxy-2-(4-butyloxy-phenyl)-pyrimidin | 25,2 Mol-% |
| 5-Octyloxy-2-(4-decyloxy-phenyl)-pyrimidin | 20 Mol-% |
| 2-(4-Octyloxy-phenyl)-pyrimidin-5-yl-nonansäureester Verbindung des Typs XI | 20 Mol-% |

zeigt folgende flüssigkristalline Phasenbereiche:
X 10 $S_c$ 85 $S_A$ 91 N 96 I

b) im Vergleich dazu weist die, in DE 3831226.3 beanspruchte flüssigkristalline Mischung, die sich von der obgengenannten Mischung nur dadurch unterscheidet, daß sie keine Verbindung des Typs XI enthält, folgende Phasenbereiche auf:
X 13 $S_c$ 81 $S_A$ 95 N 98 I

Die Zugabe einer Komponente des Typs XI führt also zu einer Verbreiterung der nematischen Phase und einer Erniedrigung des Schmelzpunktes um 3° C.

**Beispiel 3**

a) Eine Mischung aus den 5 Komponenten

| | |
|---|---|
| 5-Octyloxy-2-(4-hexyloxy-phenyl)-pyrimidin | 23,8 Mol-% |
| 5-Octyloxy-2-(4-octyloxy-phenyl)-pyrimidin | 11 Mol-% |
| 5-Octyloxy-2-(4-butyloxy-phenyl)-pyrimidin | 25,2 Mol-% |
| 5-Octyloxy-2-(4-decyloxy-phenyl)-pyrimidin | 20 Mol-% |
| 2-(4-Heptanoyloxy-phenyl)-pyrimidin-5-yl-nonansäureester Verbindung des Typs XIb | 20 Mol-% |

zeigt folgende flüssigkristalline Phasenbereiche:
X 11 $S_c$ 81 $S_A$ 87 N 93 1

b) im Vergleich dazu weist die, in DE 3831226.3 beanspruchte flüssigkristalline Mischung, die sich von der obengenannten Mischung nur dadurch unterscheidet, daß sie keine Verbindung des Typs XIb enthält, folgende Phasenbereiche auf:
X 13 $S_c$ 81 $S_A$ 95 N 98 I

Die Zugabe einer Komponente des Typs XII führt offensichtlich zu einer Verbreiterung der nematischen Phase und einer Erniedrigung des Schmelzpunktes.

**Beispiel 4**

a) Eine Mischung aus den 5 Komponenten

| | |
|---|---|
| 5-Octyloxy-2-(4-hexyloxy-phenyl)-pyrimidin | 22,3 Mol-% |
| 5-Octyloxy-2-(4-octyloxy-phenyl)-pyrimidin | 10,3 Mol-% |
| 5-Octyloxy-2-(4-butyloxy-phenyl)-pyrimidin | 23,6 Mol-% |
| 5-Octyloxy-2-(4-decyloxy-phenyl)-pyrimidin | 18,8 Mol-% |
| trans-4-Pentyl-cyclohexancarbonsäure[4-(5-octyl-pyridin-2yl)]phenylester Verbindung des Typs XII | 25 Mol-% |

zeigt folgende flüssigkristalline Phasenbereiche:
X 11 $S_c$ 91 $S_A$ 97 N 111 I

b) im Vergleich dazu weist die, in DE 3831226.3 beanspruchte flüssigkristalline Mischung, die sich von der obengenannten Mischung nur dadurch unterscheidet, daß sie keine Komponente der allgemeinen Formel XII enthält folgende Phasenbereiche auf:
X 13 $S_c$ 81 $S_A$ 95 N 98 I

Die Zugabe einer Verbindung des Typs XII führt offensichtlich zu einer Verbreiterung der nematischen Phase und einer Erniedrigung des Schmelzpunktes um 2° C.

**Beispiel 5**

a) Eine Mischung aus den 4 Komponenten

| | |
|---|---|
| 5-Octyloxy-2-(4-hexyloxy-phenyl)-pyrimidin | 36,2 Mol-% |
| 5-Octyloxy-2-(4-octyloxy-phenyl)-pyrimidin | 24,1 Mol-% |
| 5-Octyloxy-2-(4-butyloxy-phenyl)-pyrimidin | 29,7 Mol-% |
| trans-4-Pentyl-cyclohexancarbonsäure-[4-(5-decyl-thiopyrimidin-2-yl)]-phenylester Verbindung des Typs XII | 10 Mol-% |

zeigt folgende flüssigkristalline Phasenbereiche:
X 19 $S_c$ 76 $S_A$ 91 N 100 I

b) im Vergleich dazu weist die, in DE 3831226.3 beanspruchte flüssigkristalline Mischung, die sich von der obengenannten Mischung nur dadurch unterscheidet, daß sie keine Verbindung des Typs XII enthält, folgende Phasenbereiche auf:
X 22 $S_c$ 84 $S_A$ 95 N 97 I

Die Zugabe einer Verbindung des Typs XII führt also zu einer Erniedrigung des Schmelzpunktes und zu einer Verbreiterung der nematischen Phase.

Beispiel 6

a) Eine Mischung aus den 9 Komponenten

| | |
|---|---|
| 5-Octyloxy-2-(4-hexyloxy-phenyl)-pyrimidin | 13 Mol-% |
| 5-Octyloxy-2-(4-octyloxy-phenyl)-pyrimidin | 6 Mol-% |
| 5-Octyloxy-2-(4-butyloxy-phenyl)-pyrimidin | 13,6 Mol-% |
| 5-Octyloxy-2-(4-decyloxy-phenyl)-pyrimidin | 10,9 Mol-% |
| 5-Octyl-2-(4-dodecyloxy-phenyl)-pyrimidin | 9,6 Mol-% |
| Decansäure-[4-(5′-octylpyrimidin-2′-yl]-phenylester | 16 Mol-% |
| Heptansäure-[4-(5′-octylpyrimidin-2′-yl]-phenylester | 20 Mol-% |
| 2-(4-Octyloxy-phenyl)-pyrimidin-5-nonansäureester (Verbindung des Typs XI) | 10,9 Mol-% |

zeigt folgende flüssigkristalline Phasenbereiche:
X -6 $S_c$ 70 $S_A$ 75 N 80,5 I

b) im Vergleich dazu weist die, in DE 3831226.3 beanspruchte flüssigkristalline Mischung, die sich von der obengenannten Mischung nur dadurch unterscheidet, daß sie keine Verbindung des Typs XI enthält, folgende Phasenbereiche auf:
X -4 $S_c$ 63.5 $S_A$ 74,5 N 79 I

Die Zugabe einer Verbindung des Typs XI führt offensichtlich zu einer Erniedrigung des Schmelzpunktes

Beispiel 7

a) Eine Mischung aus den 4 Komponenten

| | |
|---|---|
| 5-Octyloxy-2-(4-hexyloxy-phenyl)-pyrimidin | 30 Mol-% |
| 5-Octyloxy-2-(4-octyloxy-phenyl)-pyrimidin | 20 Mol-% |
| 5-Octyloxy-2-(4-butyloxy-phenyl)-pyrimidin | 25 Mol-% |
| trans-4-Pentyl-cyclohexancarbonsäure-[5-((butyldimethylsilyl)-butyloxy)-pyrimidin-2-yl]-phenylester (Verbindung des Typs XII) | 25 Mol-% |

zeigt folgende flüssigkristalline Phasenbereiche:
X 19 $S_c$ 79 N 102 I

Bei einer Abkühlrate von 10 °C $min^{-1}$ kristallisiert die Substanz bei einer Temperatur von -3 °C.

b) im Vergleich dazu weist die, in DE 3831226 beanspruchte flüssigkristalline Mischung, die sich von der obengenannten Mischung nur dadurch unterscheidet, daß sie keine Verbindung des Typs XII enthält, folgende Phasenbereiche auf:
X 21,5 $S_c$ 85 $S_A$ 95 N 97,5 I

Unter den obengenannten Bedingungen kristallisiert die Mischung bei 12 °C. Die erfindungsgemäße Verbindung des Typs XII führt sowohl zu einer Erniedrigung des Schmelzpunktes als auch zu einer deutlichen Erniedrigung der Kristallisationstemperatur und zu einer Verbreiterung des nematischen Phasenbereiches.

c) Eine weitere Vergleichsmischung, die in der Vergleichsmischung 7b an Stelle der Verbindung des Typs XII 25 Mol-% der folgenden Verbindung enthält trans-4 Pentyl-cyclohexancarbonsäure-[5-nonyloxypyrimidin-2-yl]-phenylester weist die folgenden Phasen auf:
X26 $S_c$ 88 N 116 I

Unter den gleichen Bedingungen wie in Beispiel 7a kristallisiert die Probe bei 10 °C.

Die erfindungsgemäße Mischung 7a hat den Vorteil, daß die Mischung einen niedrigeren Schmelzpunkt aufweist und erst bei viel tieferen Temperaturen auskristallisiert.

Beispiel 8

a) Eine Mischung aus den 7 Komponenten

| | |
|---|---|
| 5-Octyloxy-2-(4-hexyloxy-phenyl)-pyrimidin | 16,2 Mol-% |
| 5-Octyloxy-2-(4-octyloxy-phenyl)-pyrimidin | 7,5 Mol-% |
| 5-Octyloxy-2-(4-butyloxy-phenyl)-pyrimidin | 17,1 Mol-% |
| 5-Octyloxy-2-(4-decyloxy-phenyl)-pyrimidin | 13,6 Mol-% |
| 5-Octyl-2-(4-dodecyloxy-phenyl)-pyrimidin | 12 Mol-% |
| 5-Octyl-2-(4-decanoyloxy-phenyl)-pyrimidin | 20 Mol-% |
| 2-(4-Octyloxyphenyl)-pyrimidin-5-yl-nonansäureester (Verbindung des Typs XI) | 13,6 Mol-% |

zeigt folgende flüssigkristalline Phasenbereiche:

X 4 $S_c$ 75 $S_A$ 81 N 85 I

b) im Vergleich dazu weist die, in DE 3831226 beanspruchte flüssigkristalline Mischung, die sich von der obengenannten Mischung nur dadurch unterscheidet, daß sie keine Verbindung des Typs XI enthält, folgende Phasenbereiche auf:

X 7 $S_c$ 63 $S_A$ 74 N 88 I

Die Zugabe der Verbindung des Typs XI führt also zu einer deutlichen Erniedrigung des Schmelzpunktes.

Beispiel 9

a) Eine Mischung aus den 7 Komponenten

| | |
|---|---|
| 5-Octyloxy-2-(4-hexyloxy-phenyl)-pyrimidin | 14,2 Mol-% |
| 5-Octyloxy-2-(4-octyloxy-phenyl)-pyrimidin | 6,6 Mol-% |
| 5-Octyloxy-2-(4-butyloxy-phenyl)-pyrimidin | 15 Mol-% |
| 5-Octyloxy-2-(4-decyloxy-phenyl)-pyrimidin | 12 Mol-% |
| trans-4-Pentyl-cyclohexancarbonsäure-[4-(5-decyl-pyrimidin-2-yl)]-phenylester | 16 Mol-% |
| Heptansäure-[4-(5′-Octylpyrimidin-2′-yl)]phenylester | 21,2 Mol-% |
| 2-(4-Octyloxy-phenyl)-pyrimidin-5-yl-nonansäureester (Verbindung des Typs XI) | 15 Mol-% |

zeigt folgende flüssigkristalline Phasenbereiche:

X-2 $S_c$ 77,5 N 96 I

b) im Vergleich dazu weist die, in DE 3831226 beanspruchte flüssigkristalline Mischung, die sich von der obengenannten Mischung nur dadurch unterscheidet, daß sie keine Verbindung des Typs XI enthält, folgende Phasenbereiche auf:

X 2,5 $S_c$ 75 $S_A$ 80 N 98 I

Die Zugabe einer Verbindung des Typs XI führt zu einer Erniedrigung des Schmelzpunktes und zu einer Verbreiterung des nematischen Bereiches.

Beispiel 10

a) Eine Mischung aus den 7 Komponenten

| | |
|---|---|
| 5-Octyloxy-2-(4-hexyloxy-phenyl)-pyrimidin | 12,4 Mol-% |
| 5-Octyloxy-2-(4-octyloxy-phenyl)-pyrimidin | 4,1 Mol-% |
| 5-Octyloxy-2-(4-butyloxy-phenyl)-pyrimidin | 13,7 Mol-% |
| 5-Octyloxy-2-(4-decyloxy-phenyl)-pyrimidin | 7,5 Mol-% |
| 5-Octyl-2-(4-dodecyloxy-phenyl)-pyrimidin | 11,1 Mol-% |
| Heptansäure-[4-(5′-octylpyrimidin-2′-yl)]phenylester | 18,5 Mol-% |
| trans-4-Pentyl-cyclohexancarbonsäure-[4-(5-decyl-pyrimidin-2-yl)]-phenylester | 17,7 Mol-% |
| 2-(4-Octyloxy-phenyl)-pyrimidin-5-yl-nonansäureester (Verbindung des Typs XI) | 15 Mol-% |

zeigt folgende flüssigkristalline Phasenbereiche:
X-11 $S_c$ 75 N* 94 I

b) im Vergleich dazu weist die, in DE 3831226 beanspruchte flüssigkristalline Mischung, die sich von der obengenannten Mischung nur dadurch unterscheidet, daß sie keine Verbindung des Typs XI enthält, folgende Phasenbereiche auf:
X-9 $S_c$ 72 $S_A$ 76 N 96 I

Die Zugabe der Komponente XI führt offensichtlich zu einer Erniedrigung des Schmelzpunktes.

Beispiel 11

a) Eine flüssigkristalline Mischung besteht aus
80 Mol-% der Mischung aus Beispiel 6a
20 Mol-% trans-Pentyl-cyclohexancarbonsäure [4-(5-octyl-pyridin-2-yl)]-phenylester
(Verbindung des Typs XII)
zeigt folgende flüssigkristallinen Phasenbereiche:
X-14 $S_c$ 79 N 95 I

Die Kristallisationstemperatur bei einer Abkühlrate von 10° C $min^{-1}$ liegt bei -28° C.

Ein Vergleich mit Beispiel 6a zeigt, daß die Zugabe der Komponente des Typs XII zu einer Erniedrigung des Schmelzpunktes und zu einer Verbreiterung des nematischen Phasenbereiches führen.

b) Zum Vergleich bietet sich folgende Mischung an:
80 Mol-% der Mischung aus Beispiel 6a
20 Mol-% trans-Pentyl-cyclohexancarbonsäure-[4-(5-octylpyrimidin-2-yl)-phenylester
Verbindung des Typs II
zeigt die Phasenbereiche:
X 18 $S_c$ 72,8 N 96 I

Die Kristallisationstemperatur bei den obengenannten Bedingungen liegt bei -13° C.

Die Verwendung der erfindungsgemäßen Komponente des Typs XII hat also deutliche Vorteile im Vergleich zur Verwendung der analogen Komponente des Typs II. So beachtet man bei Verwendung der Komponente des Typs XII niedrigere Schmelzpunkte und deutlich niedrigere Kristallisationstemperaturen.

Beispiel 12

Eine Mischung besteht aus
80 Mol-% der Mischung aus Beispiel 7b
20 Mol-% 2-(4-Octyloxy-phenyl)-pyrimidin-5-yl-nonansäureester
(Verbindung des Typs XI)
und zeigt folgende flüssigkristalline Phasenbereiche
X 17 $S_c$ 87 $S_A$ 91 N 96 I

Der Vergleich mit der Mischung aus Beispiel 7b zeigt, daß die Zugabe einer Verbindung des Typs XI zu einer Erniedrigung des Schmelzpunktes um 4,5° C führt.

Beispiel 13

Eine Mischung besteht aus
80 Mol-% der Mischung aus Beispiel 12
20 Mol-% trans-4-Pentyl-cyclohexancarbonsäure-[5-(9-cyclopropyl-nonyloxy)-pyrimidin-2-yl]-phenylester (Verbindung des Typs XII)
zeigt folgende Phasenbereiche: X 15 $S_c$ 87 N 111 I

Der Vergleich mit der Mischung aus Beispiel 12 zeigt, daß die Zugabe der Komponente XII den Schmelzpunkt erniedrigt und die Breite der nematischen Phase vergrößert.

Beispiel 14

a) Eine Mischung aus den 5 Komponenten

| | |
|---|---|
| 5-Octyloxy-2-(4-butyloxy-phenyl)-pyrimidin | 25,2 Mol-% |
| 5-Octlyoxy-2-(4-hexyloxy-phenyl)-pyrimidin | 23,8 Mol-% |
| 5-Octyloxy-2-(4-octyloxy-phenyl)-pyrimidin | 11 Mol-% |
| 5-Octyloxy-2-(4-decyloxy-phenyl)-pyrimidin | 20 Mol-% |
| trans-4-Pentyl-cyclohexancarbonsäure-[4-(5-butyldimethylsilylhexyl-pyrimidin-2-yl]-phenylester | 20 Mol-% |

zeigt folgende flüssigkristalline Phasenbreiche:
X 10 $S_c$ * 85 $S_A$ * 90 N* 98 I

b) Im Vergleich dazu weist die flüssigkristalline Mischung gemäß DE-A-38 31 226.3,die sich von der obengenannten ferroelektrischen Mischung nur dadurch unterscheidet, daß sie keinen Dotierstoff enthält, folgende Phasenbereich auf
X 13 $S_c$ 81 $S_A$ 95 N 98 I

Die ferroelektrische Mischung weist dazu im Vergleich einen um 3 °C niedrigeren Schmelzpunkt auf.

Beispiel 15

Eine Mischung bestehend aus
85 Mol-% der Mischung aus Beispiel 10b
15 Mol-% trans-4-pentyl-cyclohexansäure-[4-(5-butyldimethylsilylhexyl-pyrimidin-2 yl)]phenylester
zeigt folgende flüssigkristalline Phasenbereiche
X-14 $S_c$ 75 N 96 I

Die Zugabe der Komponente des Typs XII führt offensichtlich zu einer Erniedrigung des Schmelzpunktes um 5 °C.

## Ansprüche

1. Flüssigkristalline Mischung, enthaltend als Komponente A mindestens zwei 5-Alkoxy-2-(alkyloxyphenyl)-pyrimidine der allgemeinen Formel (I)

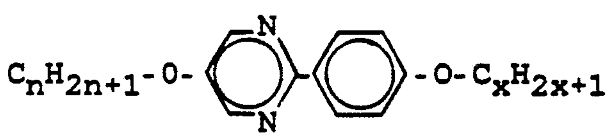

(I),

in der die Alkylreste geradkettige Alkylreste sind, in denen n eine ganze Zahl von 6 bis 14 und x eine ganze

Zahl von 2 bis 14 bedeutet, mit der Maßgabe, daß n bei den Mischungskomponenten der allgemeinen Formel (I) konstant ist, und daß sich x jeweils um mindestens $\Delta x = 2$ unterscheidet,
und gegebenenfalls einen oder mehrere Cyclohexancarbonsäureester der allgemeinen Formel (II)

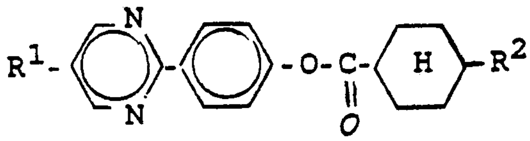

(II),

in der $R^1$ einen Alkylrest mit 10 bis 16 C-Atomen oder einen Alkyloxyrest mit 8 bis 14 C-Atomen und $R^2$ einen Alkylrest mit 2 bis 9 C-Atomen bedeutet,
und gegebenenfalls ein oder mehrere Alkyl-pyrimidin-alkoxy-phenyl-Derivate der allgemeinen Formel (IV)

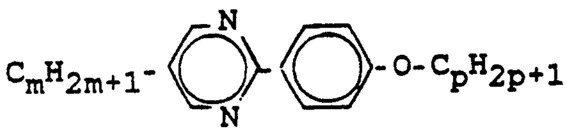

(IV),

in der m und p unabhängig voneinander ganze Zahlen von 6 bis 14 sind,
sowie gegebenenfalls enthaltend als Komponente B einen oder mehrere Carbonsäureester der allgemeinen Formeln (V), (VI), (VII), (VIII) und (IX)

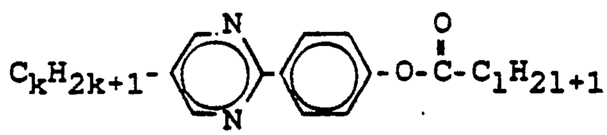

(V),

wobei
k eine ganze Zahl von 6 bis 14 und
l eine ganze Zahl von 2 bis 14 bedeuten kann,

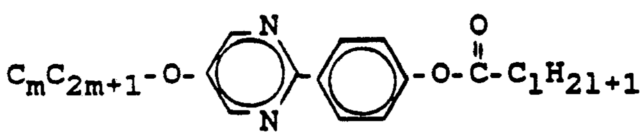

(VI),

wobei
m eine ganze Zahl von 5 bis 14 und
l eine ganze Zahl von 2 bis 14 bedeuten kann,

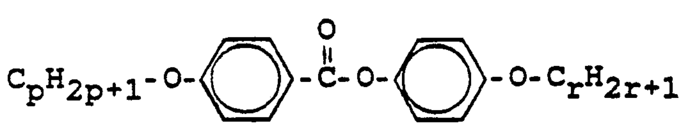

(VII),

wobei
p eine ganze Zahl von 7 bis 14 und
r eine ganze Zahl von 4 bis 14 bedeuten kann,

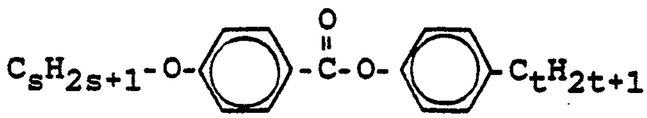 (VIII),

wobei
s eine ganze Zahl von 6 bis 14 und
t eine ganze Zahl von 6 bis 14 bedeuten kann,

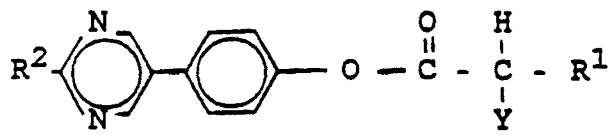 (IX),

wobei
$R^2$ = geradkettiges oder verzweigtes ($C_1$-$C_{12}$)-Alkyl oder Alkenyl, wobei eine oder zwei nichtbenachbarte $CH_2$-Gruppen durch O- und/oder S-Atome ersetzt sein können,
Y = F, Cl, Br, CN oder $CF_3$ und
$R^1$ = verzweigtes ($C_3$-$C_9$)-Alkyl, Benzyl oder Phenyl bedeuten,
sowie gegebenenfalls als Komponente C eine optisch aktive Verbindung aus der Gruppe
a) optisch aktive Ester aus a-Chlorcarbonsäuren und mesogenen Phenolen,
b) optisch aktive Ester des N-Acylprolins,
c) optisch aktive Ester von 1,3-Diocolan-4-carbonsäuren,
d) optisch aktive Ester von Oxiran-2-carbonsäuren, e) optisch aktive Ester der Tetrahydrofuran-2-carbonsäure mit mesogenen Phenolen,
f) optisch aktive Aryl-2,3-epoxyalkyl-ether,
g) optisch aktive 1,3-Dioxolan-4-yl-ether,
dadurch gekennzeichnet, daß die Flüssigkristallmischung ferner als Komponente D mindestens einen Carbonsäureester der allgemeinen Formel XI enthalten

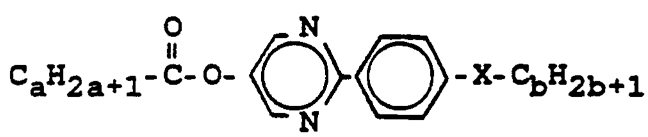 (XI)

wobei
a, b unabhängig voneinander
eine ganze Zahl von 2 bis 14

-X- eine $-O-\overset{O}{\overset{\|}{C}}-$ oder eine -O- Gruppe bedeuten kann

und/oder einen oder mehrere trans-Cyclohexancarbonsäureester der allgemeinen Formel XII

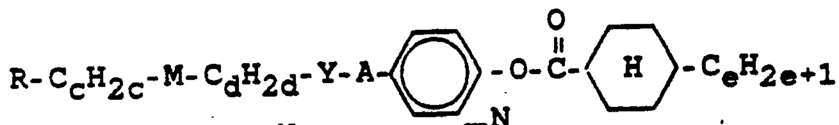 (XII)

wobei A = 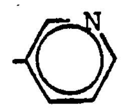 , 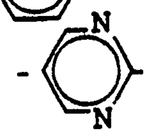

$-Y- = -CH_2-, -O-, -S-,$

-M- = 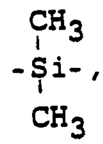, -O- , $-CH_2-$

-R = -H, $-CH_3$, 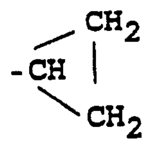

c = eine ganze Zahl zwischen 1 und 12
d = eine ganze Zahl von 0 bis 6
e = eine ganze zahl von 2 bis 9
bedeuten, unter der Bedingung, daß, wenn M gleich $CH_2$ ist, d gleich Null ist, wenn

A gleich 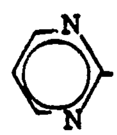 ist,

R nicht gleich H oder $CH_3$ ist oder M nicht gleich $CH_2$ sein darf, und wenn M ungleich $CH_2$ ist, muß d größer als Null sein.

2. Flüssigkristalline Mischung nach Anspruch 1, dadurch gekennzeichnet, daß sie als Komponente A keine Verbindung der allgemeinen Formel II und als Kompopnente B keine Verbindungen der allgemeinen Formeln (VII) und (VIII) enthalten.

3. Flüssigkristalline Mischung nach Anspruch 2, dadurch gekennzeichnet, daß sie als Komponente D neben einer Verbindung des Typs XI mindestens eine Verbindung des Typs XII enthält.

4. Flüssigkristalline Mischung nach Anspruch 1 oder 2, dadurch gekennzeichnet, daß sie als Komponente D ein 5-Alkanoyloxy-2-(4′-alkyloxyphenyl)pyrimidin der allgemeinen Struktur XIa enthält,

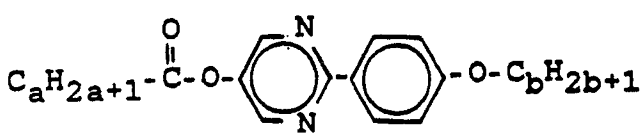 (XIa)

wobei a und b unabhängig voneinander eine ganze Zahl von 2 bis 14 bedeuten.

5. Flüssigkristalline Mischung nach Anspruch 1 oder 2, dadurch gekennzeichnet, daß sie als Komponente D

einen
2-(4′-Alkanoyloxy-phenyl)pyrimidin-5-yl-alkansäurester der allgemeinen Struktur XIb enthält,

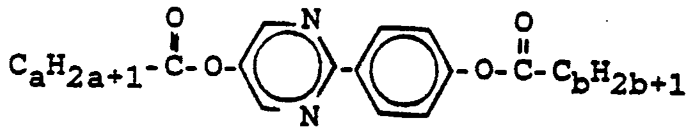

(XIb)

wobei a und b unabhängig voneinander eine ganze Zahl von 2 bis 14 bedeuten.

6. Flüssigkristalline Mischung nach Anspruch 1 oder 2, dadurch gekennzeichnet, daß sie als Komponente D einen Cyclohexancarbonsäureester der allgemeinen Struktur (XII) enthält.

7. Elektro-optisches Bauteil, enthaltend eine flüssigkristalline Mischung nach Anspruch 1.

8. Verwendung von flüssigkristallinen Mischungen nach einem der Ansprüche 1 bis 6 in elektro-optischen Schalt- und Anzeigelementen.